# FASCICULE DE BREVET EUROPEEN

(11) **EP 2 688 733 B1**
(45) Date de publication et mention de la délivrance du brevet: **10.05.2017**
(21) Numéro de dépôt: 12711621.8
(22) Date de dépôt: 23.03.2012
(51) Int. Cl.: B29C 70/22, B29C 70/46, B29C 70/50, C08L 77/00, C08J 5/04

(54) **PROCEDE DE FABRICATION D'ETOFFES IMPREGNEES POUR ARTICLES COMPOSITES**
VERFAHREN ZUR HERSTELLUNG EINES IMPREGNIERTEN STOFFES
PROCESS FOR MANUFACTURE OF IMPREGNATED FABRIC FOR COMPOSITE ARTICLES

(30) Priorité: 23.03.2011 FR 1152398
(43) Date de publication de la demande: 29.01.2014
(73) Titulaire: RHODIA OPERATIONS, 93306 Aubervilliers (FR)
(72) Inventeur: DI MARTINO, Audrey, F-69150 Décines (FR)
(74) Mandataire: Benvenuti, Federica
(86) Numéro de dépôt international: PCT/EP2012/055200
(87) Numéro de publication internationale: WO 2012/127029

(56) Documents cités:
- EP-A2- 0 682 070
- WO-A1-2008/155318
- WO-A1-2011/003786
- THOMPSON M R ET AL: "EXPERIMENTS AND FLOW ANALYSIS OF A MICROPELLETIZING DIE", POLYMER ENGINEERING AND SCIENCE, BROOKFIELD CENTER, US, vol. 44, no. 7, 1 juillet 2004 (2004-07-01), pages 1391-1402, XP001220913, ISSN: 0032-3888, DOI: DOI:10.1002/PEN.20134
- "OSHA Technical Manual, Polymer Matrix Materials: Advanced Composites", United States Department of Labor, Occupational Safety & Health Administration , 20 janvier 1999 (1999-01-20), XP002651495, Extrait de l'Internet: URL:www.osha.gov/dts/osta/otm/otm_iii/otm_ iii_1.html#7 [extrait le 2011-07-19]
- NUNES J P ET AL: "Production of Powder-Coated Towpregs and Composites", JOURNAL OF THERMOPLASTIC COMPOSITE MATERIALS, SAGE PUBLICATIONS, vol. 16, no. 3, 1 mai 2003 (2003-05-01), pages 231-248, XP009150365, ISSN: 0892-7057 cité dans la demande
- PADAKI S ET AL: "A simulation study on the effects of particle size on the consolidation of polymer powder impregnated tapes", COMPOSITES PART A: APPLIED SCIENCE AND MANUFACTURING, ELSEVIER SCIENCE PUBLISHERS B.V., AMSTERDAM, NL, vol. 30, no. 3, 1 mars 1999 (1999-03-01), pages 325-337, XP004156121, ISSN: 1359-835X, DOI: 10.1016/S1359-835X(98)00115-8

## Description

La présente invention concerne l'utilisation de polyamide de haute fluidité sous forme de particules ayant un diamètre médian D50 spécifique pour la fabrication d'étoffes imprégnées servant à la fabrication de matériaux composites. Le domaine de l'invention est celui des matériaux composites et de leurs procédés de fabrication.

### ART ANTERIEUR

Dans le domaine des matériaux hautes-performances, les composites ont pris une place prépondérante, notamment de par leurs performances et les gains de poids qu'ils autorisent. Les composites hautes performances les plus connus à ce jour sont obtenus à partir de résines thermodurcissables, dont l'utilisation est limitée aux applications de faibles à moyennes séries, principalement dans l'aéronautique, le sport automobile, et, dans les meilleurs cas, présentent des temps de fabrication voisins d'une quinzaine de minutes, comme par exemple, lors de la fabrication de skis. Le coût de ces matériaux, et/ou les temps de fabrication, les rendent difficilement compatibles avec un usage en grande série. De plus, l'utilisation de résines thermodurcissables implique souvent la présence de solvants et de monomères. Enfin, ces composites sont difficilement recyclables.

Une réponse, en regard des temps de fabrication, est donnée par les composites à matrices thermoplastiques. Les polymères thermoplastiques sont en général connus pour leur viscosité élevée, ce qui constitue un frein en ce qui concerne l'imprégnation des matériaux de renfort, composés en général de faisceaux multifilamentaires très denses. Il résulte de l'emploi des matrices thermoplastiques disponibles sur le marché, une difficulté d'imprégnation nécessitant soit des temps d'imprégnation prolongés, soit des pressions de mise en oeuvre importantes. Dans la majeure partie des cas, les matériaux composites obtenus à partir de ces matrices peuvent présenter des microvides et des zones non imprégnées. Ces microvides causent des chutes de propriétés mécaniques, un vieillissement prématuré du matériau ainsi que des problèmes de délaminage lorsque le matériau se compose de plusieurs couches de renforts. Ce phénomène de perte de propriétés mécaniques est par ailleurs accentué lorsque les temps de cycle pour la fabrication des articles composites diminuent.

Il est connu d'utiliser des polyamides de haute fluidité pour accroitre l'imprégnation des étoffes de renfort pour la fabrication d'articles composites à fibres continues.

Il est aussi connu d'imprégner les étoffes de renfort par de la poudre de matières thermoplastiques qui sont classiquement saupoudrés sur lesdites étoffes. L'étoffe poudrée traverse alors une zone de chauffage dans laquelle la poudre atteint une température suffisante à une température égale ou supérieure à celle de son point de fusion pour qu'elle se liquéfie en partie ou totalement et imprègne l'étoffe en se solidifiant. Toutefois l'utilisation de poudres est contraignante dans un processus industriel de fabrication d'étoffes imprégnées. En effet, la fabrication de poudre est coûteuse et nécessite une attention particulière pour ce qui concerne le séchage. Un tel séchage peut requérir un chauffage assez intensif et long. L'utilisation de poudre dans ce procédé ne permet ainsi pas de réaliser un procédé plus intégré et intensifié.

L'objectif de la présente invention est donc de remédier en tout ou partie à ces inconvénients en proposant un procédé de fabrication d'étoffes imprégnées permettant l'obtention d'articles composites qui puisse être fabriqués avec des temps de cycle courts tout en ayant de bonnes propriétés d'usage, telles que de bonnes propriétés mécaniques.

### INVENTION

La demanderesse a découvert de manière inattendue que l'utilisation de polyamides de haute fluidité sous la forme de particules présentant un diamètre médian D50 spécifique pour l'imprégnation d'étoffes de renfort permettait l'obtention d'étoffes imprégnées et également d'articles composites présentant de bonnes propriétés mécaniques, telles que notamment la rigidité, la résistance à la rupture, la résistance aux chocs, et le comportement en fatigue, même lorsqu'ils sont fabriqués avec des temps de cycle plus courts que ceux habituellement utilisés, et sans aucun autre traitement, en particulier en terme de séchage par chauffage et de protection de l'humidité des particules de polyamide. Ceci permet de fournir un matériau composite présentant un avantage de réduction de coûts de fabrication, par l'emploi d'un outillage mettant en oeuvre des temps de cycles raccourcis.

Les articles produits selon l'invention présentent notamment les avantages de rigidité, légèreté, et recyclabilité, et un bon aspect de surface.

L'invention a pour objet un procédé de fabrication d'une étoffe imprégnée comprenant au moins :
a) mise en présence d'au moins une étoffe de renfort avec des particules présentant un diamètre médian D50 compris entre 0,3 et 2 mm ; lesdites particules sont obtenues à partir d'une composition polyamide présentant une viscosité à l'état fondu comprise entre 0,5 et 50 Pa.s ; celle-ci étant mesurée au plateau newtonien à un cisaillement de 100 s⁻¹ dans un rhéomètre capillaire à une température de 25°C au dessus du point de fusion de la composition polyamide ;
b) chauffage du mélange obtenu à l'étape a) à une température permettant la mise en fusion au moins partielle des particules ; et
c) récupération de l'étoffe imprégnée.

Tout particulièrement le procédé ne comprend pas d'étape préliminaire de séchage des particules par chauffage et/ou sous vide, en particulier pendant plus d'une heure, ni la conservation dans des contenants étanches, notamment en vue d'éviter la reprise en eau des particules de polyamide et permettant de conserver la teneur en eau des particules, comme cela peut être nécessaire dans le cas des poudres.

Les particules peuvent être séchées par des traitements uniquement mécaniques, tels que centrifugation ou filtration, et conservées sans protection particulière, notamment dans des sacs qui ne sont pas étanches à l'eau, avant mise en oeuvre du procédé.

L'utilisation de telles particules permet donc de conduire à un procédé qui est plus court et intégré entre la production des particules et leur utilisation et/ou rend les procédures de conservation beaucoup plus aisées.

L'invention implique l'utilisation de particules présentant un diamètre médian D50 compris entre 0,3 et 2 mm ; lesdites particules sont obtenues à partir d'une composition polyamide présentant une viscosité à l'état fondu comprise entre 0,5 et 50 Pa.s ; celle-ci étant mesurée au plateau newtonien à un cisaillement de 100 s⁻¹ dans un rhéomètre capillaire à une température de 25°C au dessus du point de fusion de la composition polyamide ; pour l'imprégnation d'une étoffe de renfort.

Tout particulièrement, ces particules peuvent être utilisées sans qu'elles subissent un séchage par chauffage et/ou sous vide, en particulier pendant plusieurs heures, voire pas de chauffage et/ou de traitement sous vide du tout, et/ou sans nécessiter un conditionnement, étanche à l'eau, avant utilisation qui permette aux particules de rester à des faibles teneurs en eau, en particulier inférieure à 3 000 ppm. Autrement dit, les particules peuvent ne pas être stockées dans une atmosphère sèche.

En particulier, la composition peut présenter une viscosité à l'état fondu allant de 5 à 50 Pa.s, notamment de 10 à 50 Pa.s. De telles viscosités peuvent permettre une réalisation plus aisée des particules selon l'invention.

On entend par étoffe, une surface textile obtenue par assemblage de fils ou de fibres solidarisés par un procédé quelconque, tel que notamment collage, feutrage, tressage, tissage, tricotage. Ces étoffes sont aussi désignées comme des réseaux fibreux ou filamenteux. Par fil, on entend un monofilament, un fil multifilamentaire continu, un filé de fibres, obtenu à partir d'un unique type de fibres ou de plusieurs types de fibres en mélange intime. Le fil continu peut être également obtenu par assemblage de plusieurs fils multifilamentaires. Par fibre, on entend un filament ou un ensemble de filaments coupés, craqués ou convertis.

Les fils et/ou fibres de renfort utilisés dans le procédé selon l'invention sont préférentiellement choisis parmi les fils et/ou les fibres de carbone, de verre, d'aramides, de polyimides, de lin, de chanvre, de sisal, de coir, de jute, de kenaf et/ou de leur mélange. Plus préférentiellement, les étoffes de renfort sont uniquement constituées de fils et/ou fibres de renfort choisis parmi les fils et/ou les fibres de carbone, de verre, d'aramides, de polyimides, de lin, de chanvre, de sisal, de coir, de jute, de kenaf et/ou de leur mélange.

Ces étoffes ont préférentiellement un grammage, c'est-à-dire le poids au mètre carré, compris entre 100 et 1000 g/m².

Leur structure peut être aléatoire, unidirectionelle (1 D), ou multidirectionelle (2D, 2,5D, 3D ou autre).

On entend par diamètre médian D50, la médiane qui sépare en deux parties d'aires égales la courbe de répartition granulométrique en volume. Les analyses granulométriques peuvent être effectuées au moyen d'un granulomètre à diffraction laser Mastersizer X à banc optique étendu de la Société Malvern Instruments SA permettant de caractériser des tailles de particules comprises entre 2 et 2000 µm. La distribution étant volumique, le diamètre médian correspondra à 50% du volume total des particules. De plus, le diamètre médian donné, correspond au diamètre d'une sphère équivalente ; en supposant que tous les objets ont une forme équivalente à une sphère.

La viscosité à l'état fondu est mesurée au plateau newtonien à un cisaillement de 100 s⁻¹ dans un rhéomètre capillaire à une température de 25°C au dessus du point de fusion de la composition polyamide. La mesure est effectuée de manière à ce que la teneur en eau corresponde à la teneur en eau à l'équilibre du polyamide testé. On peut notamment mesurer la viscosité à l'état fondu à partir de granulés de la composition polyamide.

La composition polyamide comprend au moins un polyamide.

La composition comprend préférentiellement un polyamide présentant une masse moléculaire moyenne en nombre Mn supérieure à 8000 g/mol, plus préférentiellement compris entre 8000 et 20000 g/mol, ayant des propriétés mécaniques suffisantes et une certaine tenue lors des différents procédés de mises en forme.

Les polyamides semi-cristallins aliphatiques ou semi aromatiques sont particulièrement préférés.

Les polyamides peuvent être choisis dans le groupe comprenant les polyamides obtenus par polycondensation d'au moins un diacide carboxylique aliphatique linéaire avec une diamine aliphatique ou cyclique ou entre au moins un diacide carboxylique aromatique et une diamine aliphatique ou aromatique, les polyamides obtenus par polycondensation d'au moins un aminoacide ou lactame sur lui-même, ou leur mélange et (co)polyamides.

Le polyamide est notamment choisi dans le groupe comprenant les polyamides obtenus par polycondensation d'au moins un diacide carboxylique aliphatique avec une diamine aliphatique ou cyclique comme le PA 6.6, PA 6.10, PA 6.12, PA 12.12, PA 4.6, MXD 6 ou entre au moins un diacide carboxylique aromatique et une diamine aliphatique ou aromatique comme les polytéréphtalamides, polyisophtalamides, polyaramides, ou leur mélange et (co)polyamides. Le polyamide peut aussi être choisi dans les polyamides obtenus par polycondensation d'au moins un aminoacide ou lactame sur lui-même, l'amino-acide pouvant être généré par l'ouverture hydrolytique d'un cycle lactame tels que, par exemple PA 6, PA 7, PA 11, PA 12, ou leur mélange et (co)polyamides.

Des polyamides de haute fluidité peuvent notamment être obtenus en contrôlant leur poids moléculaire lors de leur synthèse, notamment par l'addition avant ou pendant la polymérisation des monomères de polyamide, de monomères modifiant la longueur des chaînes, tels que notamment des diamines, diacides carboxyliques, monoamines et/ou monoacides carboxyliques. Il est également possible d'ajouter à la polymérisation des composés multifonctionnels.

Des polyamides utilisés dans le procédé selon l'invention peuvent aussi être obtenus par mélange, notamment en fondu, de polyamides avec des monomères modifiant la longueur des chaînes, tels que notamment des diamines, diacides carboxyliques, monoamines et/ou monoacides carboxyliques.

La composition utilisée dans le procédé de l'invention peut également comprendre les copolyamides dérivés notamment des polyamides ci-dessus, ou les mélanges de ces polyamides ou (co)polyamides.

On peut également utiliser comme polyamide de haute fluidité un polyamide étoile comprenant des chaînes macromoléculaires étoiles et le cas échéant des chaînes macromoléculaires linéaires.

Le polyamide à structure étoile est un polymère comprenant des chaînes macromoléculaires étoiles, et éventuellement des chaînes macromoléculaires linéaires. Les polymères comprenant de telles chaînes macromoléculaires étoiles sont par exemple décrits dans les documents FR2743077, FR2779730, EP0682057 et EP0832149. Ces composés sont connus pour présenter une fluidité améliorée par rapport à des polyamides linéaires.

Les chaînes macromoléculaires étoiles comportent un coeur et au moins trois branches de polyamide. Les branches sont liées au coeur par une liaison covalente, par l'intermédiaire d'un groupement amide ou d'un groupement d'une autre nature. Le coeur est un composé chimique organique ou organométallique, de préférence un composé hydrocarboné comportant éventuellement des hétéroatomes et auquel sont reliées les branches. Les branches sont des chaînes polyamides. Les chaînes polyamides constituant les branches sont de préférence du type de celles obtenues par polymérisation des lactames ou aminoacides, par exemple de type polyamide 6.

Le polyamide à structure étoile selon l'invention comprend éventuellement, outre les chaînes étoiles, des chaînes polyamide linéaires. Dans ce cas, le rapport en poids entre la quantité de chaînes étoiles et la somme des quantités de chaînes étoiles et de chaînes linéaires est compris entre 0,5 et 1 bornes incluses. Il est de préférence compris entre 0,6 et 0,9.

Selon un mode de réalisation préférentiel de l'invention, le polyamide à structure étoile, c'est-à-dire comprenant des chaînes macromoléculaires étoiles, est obtenu par copolymérisation d'un mélange de monomères comprenant au moins :
a) des monomères de formule générale (I) suivante : 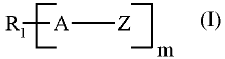
b) des monomères de formules générales (IIa) et (IIb) suivantes : 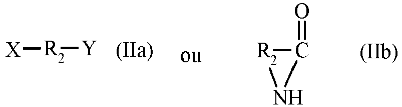
c) éventuellement des monomères de formule générale (III) suivante :

   Z-R₃-Z (III)

   dans lesquelles :
   - R₁ est un radical hydrocarboné comprenant au moins 2 atomes de carbone, linéaire ou cyclique, aromatique ou aliphatique et pouvant comprendre des hétéroatomes,
   - A est une liaison covalente ou un radical hydrocarboné aliphatique pouvant comprendre des hétéroatomes et comprenant de 1 à 20 atomes de carbone,
   - Z représente une fonction amine primaire ou une fonction acide carboxylique,
   - Y est une fonction amine primaire quand X représente une fonction acide carboxylique, ou Y est une fonction acide carboxylique quand X représente une fonction amine primaire,
   - R₂, R₃ identiques ou différents représentent des radicaux hydrocarbonés aliphatiques, cycloaliphatiques ou aromatiques substitués ou non comprenant de 2 à 20 atomes de carbone et pouvant comprendre des hétéroatomes,
   - m représente un nombre entier compris entre 3 et 8.

Par acide carboxylique, on entend les acides carboxyliques et leurs dérivés, tels que les anhydrides d'acide, les chlorures d'acide, ou les esters.

Des procédés d'obtention de ces polyamides étoiles sont décrits dans les documents FR2743077 et FR2779730. Ces procédés conduisent à la formation de chaînes macromoléculaires étoiles, en mélange avec éventuellement des chaînes macromoléculaires linéaires.

Si on utilise un comonomère de formule (III), la réaction de polymérisation est avantageusement effectuée jusqu'à l'atteinte de l'équilibre thermodynamique.

Le monomère de formule (I) peut également être mélangé à un polymère en fondu, au cours d'une opération d'extrusion.

Ainsi, selon un autre mode de réalisation de l'invention, le polyamide à structure étoile est obtenu par mélange en fondu, par exemple à l'aide d'un dispositif d'extrusion, d'un polyamide du type de ceux obtenus par polymérisation des lactames et/ou des aminoacides et d'un monomère de formule (I). De tels procédés d'obtention sont décrits dans les brevets EP0682070 et EP0672703.

Selon une caractéristique particulière de l'invention, le radical R₁ est soit un radical cycloaliphatique tel que le radical tétravalent de cyclohexanonyle, soit un radical 1,1,1-triyle-propane, 1,2,3-triyle-propane. Comme autres radicaux R1 convenables pour l'invention on peut citer à titre d'exemple, les radicaux trivalents de phényle et cyclohexanyle substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile. Avantageusement, au moins deux radicaux R₂ différents peuvent être employés dans les monomères de formule (II).

Le radical A est, de préférence, un radical méthylénique ou polyméthylénique tel que les radicaux éthyle, propyle ou butyle ou un radical polyoxyalkylènique tel que le radical polyoxyéthylènique.

Selon un mode de réalisation particulier de l'invention, le nombre m est supérieur ou égal à 3 et avantageusement égal à 3 ou 4.

La fonction réactive du composé multifonctionnel représentée par le symbole Z est une fonction capable de former une fonction amide.

De préférence, le composé de formule (I) est choisi parmi la 2,2,6,6-tétra-(β-carboxyéthyl)-cyclohexanone, l'acide trimésique, la 2,4,6-tri-(acide aminocaproique)-1,3,5-triazine et la 4-aminoéthyle-1,8-octanediamine.

Le mélange de monomères à l'origine des chaînes macromoléculaires étoiles peut comporter d'autres composés, tels que des limiteurs de chaînes, des catalyseurs, des additifs, tels que des stabilisants lumière, des stabilisants thermiques.

La composition polyamide peut également comprendre tous les additifs et charges habituellement utilisés dans les compositions à base de polyamide utilisées pour la fabrication d'articles. Ainsi, on peut citer à titre d'exemple d'additifs les stabilisants thermiques, les stabilisants lumières, les antioxydants, les lubrifiants, les pigments, les colorants, les plastifiants, les charges de renfort, et les agents modifiant la résistance aux chocs.

Des additifs pour améliorer la qualité des interfaces étoffes de renfort polyamide peuvent également être utilisés. Ces additifs peuvent être par exemple incorporés à la composition polyamide, incorporés dans les fils et/ou fibres de l'étoffe de renfort, présents sur les fils et/ou fibres de ladite étoffe, ou encore déposés sur l'étoffe de renfort. Ces additifs peuvent être des agents de couplage tels que ceux de type aminosilanes ou chlorosilanes, ou encore des agents fluidifiants ou mouillants, ou leur association.

Des charges renforçantes peuvent être incorporées à la composition polyamide. Ces charges peuvent être choisies parmi les charges fibreuses, telles que des fibres de verre courtes par exemple, ou des charges non fibreuses telles que le kaolin, le talc, la silice, le mica ou la wollastonite. Leur taille est généralement comprise entre 1 et 50 µm. Des charges sub-microniques voire nanométriques peuvent également être utilisées, seules ou en complément des autres charges.

La composition polyamide peut éventuellement comprendre une résine novolaque. Elle peut comprendre une ou plusieurs types de résine novolaque différentes.

On entend généralement par résine novolaque, une résine phénolique dont le rapport formaldéhyde/phénol est inférieur à 1 et qui, de ce fait, reste normalement thermoplastique jusqu'à ce qu'elle soit chauffée avec une quantité appropriée d'un composé, par exemple formaldéhyde ou hexaméthylènetétramine, susceptible de donner des liaisons supplémentaires, par conséquent de donner un produit infusible.

Les résines novolaques sont généralement des produits de condensation de composés phénoliques avec des aldéhydes ou cétones. Ces réactions de condensation sont généralement catalysées par un acide ou une base. Les résines novolaques présentent généralement un degré de condensation compris entre 2 et 15.

Les composés phénoliques peuvent être choisis seuls ou en mélange parmi le phénol, le crésol, le xylénol, le naphtol, les alkylphénols, comme le butyl-phénol, le terbutyl-phénol, l'isooctyl-phénol, le nitrophénol, le phénylphénol, le résorcinol ou le biphénol A ; ou tout autre phénol substitué.

L'aldéhyde le plus fréquemment utilisé est le formaldéhyde. On peut toutefois en utiliser d'autres, tels que l'acétaldéhyde, le para-formaldéhyde, le butyraldéhyde, le crotonaldéhyde, le glyoxal, et le furfural. Comme cétone, on peut utiliser l'acétone, la méthyle éthyle cétone ou l'acétophénone. L'aldéhyde et/ou la cétone peuvent éventuellement porter un autre groupement fonctionnel, tel que par exemple une fonction acide carboxylique. On peut notamment citer à cet effet l'acide glyoxylique ou l'acide lévulinique.

Selon un mode de réalisation particulier de l'invention, la résine novolaque est un produit de condensation du phénol et du formaldéhyde.

Les résines novolaques utilisées ont avantageusement un poids moléculaire compris entre 500 et 3000 g/mol, de préférence entre 800 et 2000 g/mol.

Comme résine novolaque commerciale, on peut citer notamment les produits commerciaux Durez®, Vulkadur® ou Rhenosin®.

La composition selon l'invention peut comprendre entre 1 à 30 % en poids de résine novolaque, notamment de 1 à 25 % en poids, par rapport au poids total de la composition.

On entend par particules selon la présente invention des objets pouvant prendre diverses formes telles que des formes sphériques, sensiblement sphériques, quasi-sphériques, polyédriques, ovoïdes et/ou ellipsoïdales et pouvant présenter en surface des aspérités ou de petites cavités formant des irrégularités, générés par des bulles de gaz par exemple. Les particules peuvent être des microbilles, des perles, des agrégats, des granules, des agglomérats ou autres.

Les particules de l'invention peuvent être fabriquées de diverses manières. On peut par exemple citer les voies directes par polymérisation en milieu dispersé, et les voies indirectes comme le séchage par dispersion (spray-drying), la post-condensation solide de poudre, la dissolution/précipitation, la granulation sous eau et leur combinaison. On entend par polymérisation en milieu dispersé, plusieurs procédés de polymérisation dans lequel le milieu réactionnel est « compartimenté » comme pour les procédés en émulsion, suspension et dispersion, qu'ils soient directes, inverses, micro ou macro. On entend par spray-drying ou pulvérisation-séchage ou nébulisation à chaud, la pulvérisation d'un mélange ou non de polymère de faible viscosité à l'état fondu, séché et éventuellement suivi d'une remontée en viscosité, par post-condensation de poudre par exemple. Dans la dissolution/précipitation, il y a solubilisation du polymère dans un solvant à chaud puis précipitation par refroidissement lent.

On peut notamment aussi procéder à la fabrication de particules selon l'invention par extrusion comme mentionné dans les demandes EP1797141 et EP2004751 qui décrivent l'utilisation d'un additif ajouté au polyamide et permettant après refroidissement de la composition le délitement de la dispersion de polyamide.

Les dispositifs de coupe en tête noyée pour la fabrication de particules sensiblement sphériques à partir de polymère fondu sont connus depuis très longtemps. A titre d'exemple, on peut citer les brevets US2918701 et US3749539. Par ailleurs, la demande US2005/0035483 décrit un procédé et un dispositif de coupe en tête noyée permettant de diminuer les problèmes générés par l'alimentation de polymères de point de fusion élevé et à vitesse de cristallisation élevée tels que les polyamides. Ce dernier procédé est particulièrement intéressant car il peut permettre d'obtenir des particules présentant une excellente homogénéité de taille, à telle point qu'elles peuvent être qualifiées de monodisperses et/ou présentant une bonne sphéricité.

Les particules ainsi produites sont récupérées par tout moyen connu, notamment par centrifugation, décantation ou filtration. Elles sont ensuite avantageusement séchées. Elles peuvent également être soumises à des traitements pour modifier certaines de leurs propriétés telles que l'amélioration des propriétés mécaniques par un traitement thermique ou un traitement par un rayonnement pour provoquer l'augmentation de la masse moléculaire du polymère et/ou son degré de réticulation.

Les particules de la présente invention présentent préférentiellement un diamètre médian D50 compris entre 0,5 et 1,5 mm, en particulier allant de 0,8 à 1,5 mm. Les particules peuvent présenter un D10, voire un D05 supérieur ou égale à 0,5 mm, notamment supérieur ou égale à 0,7 mm. Le D10, et le D05, sont équivalent au D50 avec respectivement 10 - 90 %, et 05 - 95 %, au lieu de 50 %.

L'étape d'imprégnation par un procédé type « poudre » sèche de l'étoffe de renfort par les particules à base d'une composition polyamide peut être réalisée de diverses manières, selon divers procédés possibles.

On peut notamment citer par exemple le saupoudrage et l'imprégnation par passage sur lit fluidisé très largement documenté, pour le dépôt de poudres.

L'imprégnation sur lit fluidisé est connu de l'homme du métier notamment pour le dépôt de poudre thermoplastiques sur câble de renfort continu, et à titre d'exemple on pourra citer les travaux de Shridhar R. Iyer, Lawrence T. Drzal ; Manufacture of Powder-Impregnated Thermoplastic Composites; Journal of Thermoplastic Composite Materials October 1990 vol. 3 325-355 et US5128199 (PA12, diamètre: 5-15 µm, lit fluidisé par énergie acoustique), J. P. Nunes, J. F. Silva, A. T. Marques, N. Crainic, and S. Cabral-Fonseca ; Production of Powder-Coated Towpregs and Composites; Journal of Thermoplastic Composite Materials May 2003 vol. 16 no. 3 231-248 et WO2002 006027 A1 (PP, D50 masse=400 µm, lit fluidisé par recirculation), US5057338 (Polyimide, diamètre : 19pm, lit fluidisé par recirculation), EP1281498 (PA6, diamètre: 20-400µm, lit fluidisé et charge électrostatique),. Baucom R.M., Marchello J.M. ; Powder curtain prepreg process ; 38th International SAMPE Symposium, May 10-13, 1993 Proceedings p1902-1915 propose également d'utiliser un système d'enduction permettant de déposer un «rideau» de poudre sur le câble de renfort étalé en une «laize» d'une dizaine de centimètre de large. Pour des étoffes de renfort continu avec une laize supérieure à 1m l'usage de lit fluidisé n'est plus approprié et l'homme du métier s'orientera naturellement vers le poudrage ou saupoudrage.

A titre d'exemple un module de saupoudrage permet de déposer par gravité la poudre sèche sur l'étoffe de renfort continue qui se déplace à vitesse constante sous la trémie du module de saupoudrage. Ladite trémie est équipée d'un cylindre structuré ou non, équipé d'un revêtement spécifique ou non, permettant un dépôt uniforme et contrôlé, sans contact direct avec l'étoffe. Un élément de raclage en contact avec le cylindre de saupoudrage enlève pendant la rotation l'excédent de la poudre et permet de garder uniquement la quantité de poudre nécessaire dans les cavités du revêtement. Une brosse oscillante extrait la poudre du cylindre de saupoudrage. Pour garantir une uniformité de dépose de la poudre et décomposer les agrégats, la poudre tombe suivant sa consistance à travers un tamis oscillant puis - sans contact - sur l'étoffe à saupoudrer en mouvement. La quantité très précise de dépose de poudre est obtenue par un asservissement ajustable de la rotation du cylindre. On peut utiliser la même technologie de saupoudrage utilisée dans le domaine de dépôt de poudre pour procéder à un saupoudrage des granules sur l'étoffe de renfort.

Il est également possible de préchauffer l'étoffe de renfort de manière à ce que les particules rentrent en contact avec une étoffe présentant une température inférieure ou égale à la température de fusion des particules de polyamide.

Le mélange obtenu à l'étape a) est alors chauffé de manière à ce que l'on procède à la fusion au moins partielle des particules, préférentiellement au moins 50 % en poids, plus préférentiellement au moins 90 % en poids. L'étoffe comprenant les particules peut par exemple traverser une zone de chauffage.

La chaleur peut être apportée par circulation d'air chaud, notamment par des brûleurs à gaz ou de fuel, par des résistances électriques, par des micro-ondes ou par chauffage infrarouge.

On préfère chauffer le mélange à une température comprise entre 230°C et 350°C.

Après l'imprégnation de l'étoffe de renfort par le polyamide, l'étoffe imprégnée est obtenue par solidification de la matrice. Le refroidissement peut avantageusement être effectué rapidement de façon à éviter une cristallisation importante du polyamide, notamment pour maintenir les propriétés de l'article. Le refroidissement peut notamment être effectué en moins de 5 minutes, plus préférentiellement en moins d'une minute, par exemple par un circuit d'air froid ou par un fluide.

Les étoffes imprégnées selon l'invention comprennent préférentiellement :
- de 40 à 70 % en volume d'étoffe de renfort, et
- de 30 à 60 % en volume de polyamide, par rapport au volume total de l'étoffe imprégnée, éventuellement sur les deux faces.

Les étoffes imprégnées peuvent être utilisées en tant que telles, par exemple après une étape de découpage et/ou de thermoformage. Les étoffes imprégnées sont également appelées prepreg dans le domaine de la fabrication des articles composites.

Il est également possible de réaliser des articles composites à partir de ces étoffes imprégnées.

La présente invention permet aussi l'utilisation d'étoffes imprégnées telle qu'obtenues précédemment pour la fabrication d'articles composites ; également appelés articles composites à fibres continues.

L'invention permet aussi un procédé de fabrication d'un article composite par empilement d'étoffes imprégnées comprenant au moins des étoffes imprégnées telles que décrites précédemment, préférentiellement dans un moule, à une température et une pression permettant la fusion du polyamide et l'obtention d'un article composite. On peut également utiliser des étoffes imprégnées selon l'invention et d'autres types d'étoffes imprégnées.

On peut par exemple par ailleurs procéder au thermoformage des articles composites sous forme de plaques pour leur donner une forme définie après refroidissement.

Ces articles peuvent aussi être des structures de type sandwich présentant une âme insérée entre deux peaux. Les composites de l'invention peuvent être utilisés pour former les couches externes, en les associant à une âme type nid d'abeille ou type mousse. Les couches peuvent être assemblées par collage chimique ou thermique.

Les structures composites accessibles avec le procédé selon l'invention peuvent être employées dans de nombreux domaines tels que l'aéronautique, l'automobile, l'industrie électrique, l'industrie des sports et loisirs. Ces structures peuvent être utilisées pour réaliser des articles de sports tels que des skis ou bien pour réaliser des surfaces diverses telles que des planchers spéciaux, des cloisons, des carrosseries de véhicules, ou des panneaux publicitaires. Dans l'aéronautique ces structures sont utilisées notamment au niveau des carénages tels que pour le fuselage, l'aile, et l'empennage. Dans l'automobile, elles sont utilisées par exemple au niveau des planchers ou des supports tels que les tablettes arrières.

D'autres détails ou avantages de l'invention apparaîtront plus clairement au vu des exemples donnés ci-dessous uniquement à titre indicatif.

### PARTIE EXPERIMENTALE

Les compositions polyamides comprennent une matrice PA 6.6 linéaire, 20 % en poids d'une résine Novolac commerciale Rhenosin® et des additifs tels que des stabilisants lumières et thermiques, comme mentionné dans la demande WO2011003786. La composition présente une température de fusion de 255°C.
- CPA1 : Composition comparative de fluidité standard ayant une viscosité à l'état fondu à 100 s⁻¹ de 114 Pa.s.
- PA1 : Composition de haute fluidité ayant une viscosité à l'état fondu à 100 s⁻¹ de 21 Pa.s
- PA2 : Composition très haute fluidité ayant une viscosité à l'état fondu à 100 s⁻¹ de 4 Pa.s

Les compositions polyamides à base de PA66 sont caractérisées par leur viscosité à l'état fondu η mesurée via un rhéomètre capillaire à 280°C ; la valeur étant mesurée au plateau newtonien à 100 s⁻¹.

L'étoffe de renfort utilisée est un tissu de verre équilibré (51/49) satin de 8 de grammage 300g/m² présentant un traitement compatible avec les thermoplastiques.

### Exemple Comparatif 1 : Fabrication d'article composite à partir de poudre

Les différentes compositions polyamides à base de polyamide 66 sous formes de granulés de taille 2,5 mm sont soumises à un broyage cryogénique, broyage qui peut être effectué par différents types de broyeurs, tels que par exemple un broyeur à disque, un broyeur à marteau, un broyeur à broches, ou un broyeur électromagnétique, par exemple à piston. Dans cet exemple, pour l'obtention de poudre de D50 = 150 µm, un broyage par broyeur à broches double rotors Micronis est effectué à une température comprise entre -10 et -200°C, préférentiellement entre -20 et -100°C. Après le broyage, il est possible de modifier la granulométrie de la poudre en utilisant des tamiseurs rotatifs ou des tamiseurs plan à mouvement giratoire. Une granulométrie contrôlée, inférieure à 400 µm et présentant un D50 de 150 µm est ainsi obtenue. La finesse de la poudre est connue pour favoriser une bonne imprégnation de l'étoffe de renfort. Le broyage cryogénique tel que défini précédemment permet également d'obtenir une poudre à base de polyamide ayant un taux d'humidité résiduel inférieur ou égal à 0,8 % en poids (8000 ppm), en sortie de broyage cryogénique. Une étape supplémentaire de séchage par toutes techniques connues de l'homme du métier est réalisée pour atteindre un taux compris entre 1000 à 3000 ppm. Ce séchage peut être par exemple effectué sous vide ou air sec, à une température de 80°C. La poudre à base de polyamide peut être ensuite mise dans un sac étanche de façon à conserver son taux d'humidité jusqu'à son utilisation. Pour déterminer le taux d'humidité d'une poudre à base de polyamide on peut utiliser la méthode Fisher selon la norme ISO 15512 1999 (F), méthode B.

La poudre sèche est alors prête à être déposée sur les étoffes de renfort par un procédé d'imprégnation de poudre en voie sèche.

La ligne utilisée est composée d'une unité de déroulement de l'étoffe de renfort, d'un champ IR, surtout utilisé dans le cas de renfort de carbone, pour préchauffer le renfort à une température de fusion égale à la température de fusion de la composition polyamide moins 20°C, d'un module de saupoudrage associé à une trémie-doseuse, de champs IR, et d'une unité d'enroulement.

Le module de saupoudrage permet de déposer par gravité la poudre sèche sur l'étoffe de renfort continue qui se déplace à vitesse constante sous la trémie du module de saupoudrage. Ladite trémie est équipée d'un cylindre permettant un dépôt uniforme et contrôlé, sans contact direct avec l'étoffe. Un élément de raclage en contact avec le cylindre de saupoudrage enlève pendant la rotation l'excédent de la poudre et permet de garder uniquement la quantité de poudre nécessaire dans les cavités du revêtement. Une brosse oscillante extrait la poudre du cylindre de saupoudrage. Pour garantir une uniformité de dépose de la poudre et décomposer les agrégats, la poudre tombe suivant sa consistance à travers un tamis oscillant puis -sans contact- sur l'étoffe à saupoudrer en mouvement.

L'étoffe poudrée traverse ensuite une zone de chauffage en champs IR en aval, dans laquelle la poudre atteint une température suffisante à une température égale ou supérieure à celle du point de fusion de la composition pour qu'elle se liquéfie en partie ou totalement et imprègne l'étoffe en se solidifiant.

Dans cet exemple la vitesse de défilement de l'étoffe est de 10 m/min et la quantité de composition à base de matrice PA 66 linéaire est de 72 g/m² pour la première face. La température du champ IR de longueur 10 m est régulée à 300°C afin de permettre la fusion de la composition en évitant sa dégradation. Ces étapes sont renouvelées pour imprégner l'autre face de l'étoffe et ainsi produire un pré-imprégné verre/PA contenant 67 % de renfort en poids soit 48% en volume.

Ce pré-imprégné est ensuite coupé aux dimensions requises pour la fabrication de plaques c'est-à-dire dans cet exemple, 150 x 150 mm.

La réalisation de plaques composites est faite au moyen d'une presse hydraulique à double plateaux contrôlés en température Schwabenthan (Polystat 300A) : plateaux chauffants par résistances chauffantes, et plateaux refroidis par circulation d'eau. Un moule métallique doté d'une empreinte de dimensions 150 mm x 150 mm est utilisé.

La température des plateaux de la presse est préalablement montée à 290°C, avant l'introduction de l'empilement de 8 pré-imprégnés de 150 x 150 mm. A cette température, une pression optimale de 5 bars est appliquée et maintenue pendant un temps de cycle de 5 minutes au plateau ; des dégazages peuvent être rapidement effectués. Le moule est alors transféré sur le dispositif plateaux refroidis et maintenu sous pression pendant le refroidissement.

La plaque composite est ensuite analysée afin de déterminer l'impact des défauts tels que porosité, inclusions gazeuses de forme, de taille et de localisation très variable, reconnus de l'homme du métier comme pouvant handicaper la tenue mécanique de la structure composite. Ces défauts seraient dus non seulement au processus de mise en oeuvre mais aussi à l'aptitude de la composition à imprégner le renfort de manière homogène. On comprend dès lors pourquoi il devient primordial de s'intéresser à ces porosités.

Il est connu qu'en dessous d'un certain pourcentage volumique, compris entre 0,8 % et 1,5 % suivant le matériau étudié, la porosité n'a pas d'influence sur le comportement de la pièce si elle est iso répartie. En revanche, pour des taux de porosité plus élevés, les propriétés mécaniques de la pièce, notamment la compression, sont affectées de manière significative. Par exemple, dans le milieu industriel aéronautique, il est admis qu'une pièce structurale comportant un taux volumique de porosité supérieur à 2% doit être rebutée.

La porosité est traditionnellement mesurée suivant une des techniques décrites dans la norme ASTM D2734-94. Notons seulement que pour des porosités inférieures à 1%, les niveaux de précisions que doivent atteindre les mesures de masse et de volumes nécessaires à la mesure ne sont pas atteignables ; une erreur de 1% sur les valeurs des densités de la résine ou de la matrice entraîne une modification de ± 0,5% en valeur absolue sur le taux de porosité déterminé.

Dans le tableau 1 de résultat il sera donc uniquement fait mention d'un taux inférieur à 1 % lorsque c'est le cas.

Les propriétés mécaniques de compression sont obtenues à 23°C, et pour une humidité RH = 50% (stabilisation des éprouvettes 48h à 23°C, RH = 50) suivant la norme ISO 14126 : 1999 (F). Les éprouvettes sont testées en compression selon la norme ISO 14126 sur une machine électromécanique SCHENCK RMC 100. Les valeurs de contraintes σ max au pic sont mesurées et calculées. Les résultats expérimentaux sont donnés Tableau 1.

### Exemple comparatif 2 : Fabrication d'article composite à partir de granulés

Les différentes compositions sont directement mises en forme à la sortie de l'extrudeuse grâce à l'utilisation d'un outil attelé de granulation de joncs. Les granulés ont une taille de 2,5 mm et sont prêts à être déposés sans autre type de préparation.

L'outil de saupoudrage est identique à celui décrit exemple comparatif 1 avec une adaptation au niveau du cylindre de poudrage qui est structuré spécifiquement pour déposer les granulés et qui est muni non pas d'une brosse oscillante mais d'une brosse rotative permettant d'extraire les granulés du cylindre de saupoudrage et de garantir une uniformité de dépose. Comme dans l'exemple comparatif 1, un pré-imprégné verre/PA contenant 67 % de renfort en poids soit 48% en volume est produit. Ce pré-imprégné est ensuite coupé aux dimensions requises pour la fabrication de plaques. Plaques qui sont analysées en porosité et compression. Les résultats sont présentés Tableau 1

### Exemple 1 : Fabrication d'article composite à partir de particules

Les différentes compositions sont directement mises en forme à la sortie de l'extrudeuse grâce à l'utilisation d'un outil attelé de granulation sous eau disposant d'une technologie de tampon thermique évitant le gel de la matrice extrudée dans les trous de la filière, par la technologie ECON EUP 600 - US20100068324A1. La production de particules ayant la forme de microbilles présentant un D50 de 1 mm est réalisée avec un débit de 500 kg/h. Un système de sécheur centrifuge en ligne permet de séparer les particules de l'eau du procédé refroidissante et sèche les particules jusqu'à obtention d'une humidité résiduelle bien inférieure à 3000 ppm. Les particules sont prêtes à être déposées sans autre type de préparation.

Dans le cas du PA2 une configuration particulière de l'extrudeuse, en particulier par rapport au refroidissement, peut être utilisée.

Par rapport à l'exemple comparatif 1, les étapes de broyage et de séchage sont évitées permettant de réaliser un procédé plus intégré et intensifié. Par la suite la manipulation de particules est beaucoup moins contraignante en terme de précaution Hygiène et Sécurité pour les opérateurs par rapport à de la poudre et notamment les particules très fines.

L'outil de saupoudrage est identique à celui décrit exemple comparatif 1 avec une adaptation au niveau du cylindre de poudrage qui est structuré spécifiquement pour déposer les particules. Comme dans l'exemple comparatif 1, un pré-imprégné verre/PA contenant 67 % de renfort en poids soit 48% en volume est produit. Ce pré-imprégné est ensuite coupé aux dimensions requises pour la fabrication de plaques. Les plaques sont alors analysées en porosité et compression. Les résultats sont présentés Tableau 1.

### Présentation des résultats

Tous les résultats sont présentés au Tableau 1.

**Tableau 1**

| **Composition** | **Mesures** | **Exemple Comparatif 1 (poudre)** | **Exemple Comparatif 2 (granulés)** | **Exemple 1 (microbilles)** |
|---|---|---|---|---|
| CPA1 | Porosité Compression | <1% 350 MPa | 6 à 10% < 200 MPa | 4% 300 MPa |
| PA1 | Porosité Compression | <1% 600 MPa | 2 à 4 % 200 MPa | **1% 400 M Pa** |
| PA2 | Porosité Compression | <1% 650 MPa | 1 à 2 % 350 MPa | **<1% 550 MPa** |

On observe ainsi l'obtention d'articles composites selon l'invention dans l'Exemple 1 et utilisant des compositions polyamides de haute fluidité PA1 et PA2 présentant de bonnes propriétés mécaniques et une faible porosité, signe d'une excellente imprégnation de la composition polyamide sur l'étoffe de renfort. On notera également que ces articles présentent un très bon aspect de surface et une facilité d'usage incomparable, dû à la faible viscosité en fondu de la composition polyamide.

Ces résultats sont obtenus sans utilisation de poudre comme il est pourtant connu dans l'état de la technique permettant ainsi d'éviter une étape contraignante et couteuse de broyage, qui plus est doit être suivit d'une étape de séchage. L'utilisation de poudre dans ce procédé ne permet ainsi pas de réaliser un procédé plus intégré et intensifié. Par ailleurs, la manipulation de granules est beaucoup moins contraignante en terme de précaution Hygiène et Sécurité pour les opérateurs par rapport à de la poudre.

On observe par ailleurs que l'utilisation de granulés de compositions polyamides pour une telle application n'est dans tous les cas pas intéressant au regard des mauvaises propriétés mécaniques obtenues.

## Revendications

1. Procédé de fabrication d'une étoffe imprégnée comprenant au moins :
a) mise en présence d'au moins une étoffe de renfort avec des particules présentant un diamètre médian D50 compris entre 0,3 et 2 mm ; lesdites particules sont obtenues à partir d'une composition polyamide présentant une viscosité à l'état fondu comprise entre 0,5 et 50 Pa.s ; celle-ci étant mesurée au plateau newtonien à un cisaillement de 100 s⁻¹ dans un rhéomètre capillaire à une température de 25°C au dessus du point de fusion de la composition polyamide ;
b) chauffage du mélange obtenu à l'étape a) à une température permettant la mise en fusion au moins partielle des particules ; et
c) récupération de l'étoffe imprégnée.

2. Procédé selon la revendication 1, **caractérisé en ce que** la composition polyamide comprend un polyamide présentant une masse moléculaire moyenne en nombre Mn supérieure à 8000 g/mol.

3. Procédé selon la revendication 1 ou 2, **caractérisé en ce que** la composition polyamide comprend un polyamide semi-cristallin aliphatique ou semi aromatique.

4. Procédé selon l'une quelconque des revendications 1 à 3, **caractérisé en ce que** la composition polyamide comprend une résine novolaque.

5. Procédé selon l'une quelconque des revendications 1 à 4, **caractérisé en ce que** la composition polyamide comprend entre 1 à 30 % en poids de résine novolaque.

6. Procédé selon l'une quelconque des revendications 1 à 5, **caractérisé en ce que** les particules présentent un diamètre médian D50 compris entre 0,5 et 1,5 mm.

7. Procédé selon l'une quelconque des revendications 1 à 6, **caractérisé en ce que** l'étape a) est réalisée par saupoudrage ou imprégnation par passage sur lit fluidisé.

8. Procédé selon l'une quelconque des revendications 1 à 7, **caractérisé en ce que** l'étape b) est réalisée à une température comprise entre 230°C et 350°C.

9. Procédé selon l'une quelconque des revendications 1 à 8, **caractérisé en ce que** l'étoffe imprégnée comprend :
- de 40 à 70 % en volume d'étoffe de renfort, et
- de 30 à 60 % en volume de polyamide, par rapport au volume total de l'étoffe imprégnée.

## Patentansprüche

1. Verfahren zur Herstellung eines imprägnierten Stoffs, das mindestens Folgendes umfasst:
a) Zusammenbringen von mindestens einem Verstärkungsstoff mit Partikeln, die einen mittleren Durchmesser D50 zwischen 0,3 und 2 mm aufweisen; wobei die Partikel aus einer Polyamidzusammensetzung erhalten werden, die eine Schmelzviskosität zwischen 0,5 und 50 Pa.s aufweist, die auf dem Newton'schen Plateau bei einer Schergeschwindigkeit von 100 s⁻¹ in einem Kapillarrheometer bei einer Temperatur von 25°C über dem Schmelzpunkt der Polyamidzusammensetzung gemessen wird;
b) Erwärmen des in Schritt a) erhaltenen Gemischs auf eine Temperatur, die das zumindest teilweise Aufschmelzen der Partikel ermöglicht; und
c) Gewinnen des imprägnierten Stoffs.

2. Verfahren nach Anspruch 1, **dadurch gekennzeichnet, dass** die Polyamidzusammensetzung ein Polyamid mit einer zahlenmittleren molaren Masse Mn von über 8000 g/mol umfasst.

3. Verfahren nach Anspruch 1 oder 2, **dadurch gekennzeichnet, dass** die Polyamidzusammensetzung ein aliphatisches oder teilaromatisches teilkristallines Polyamid umfasst.

4. Verfahren nach einem der Ansprüche 1 bis 3, **dadurch gekennzeichnet, dass** die Polyamidzusammensetzung ein Novolak-Harz umfasst.

5. Verfahren nach einem der Ansprüche 1 bis 4, **dadurch gekennzeichnet, dass** die Polyamidzusammensetzung zwischen 1 und 30 Gewichts-% eines Novolak-Harzes umfasst.

6. Verfahren nach einem der Ansprüche 1 bis 5, **dadurch gekennzeichnet, dass** die Partikel einen mittleren Durchmesser D50 zwischen 0,5 und 1,5 mm aufweisen.

7. Verfahren nach einem der Ansprüche 1 bis 6, **dadurch gekennzeichnet, dass** Schritt a) mittels Aufstreuen oder Imprägnieren durch Leiten über ein Fließbett durchgeführt wird.

8. Verfahren nach einem der Ansprüche 1 bis 7, **dadurch gekennzeichnet, dass** Schritt b) bei einer Temperatur zwischen 230°C und 350°C durchgeführt wird.

9. Verfahren nach einem der Ansprüche 1 bis 8, **dadurch gekennzeichnet, dass** der imprägnierte Stoff Folgendes umfasst:
- von 40 bis 70 Volumen-% Verstärkungsstoff und
- von 30 bis 60 Volumen-% Polyamid, bezogen auf das Gesamtvolumen des imprägnierten Stoffs.

## Claims

1. Process for the manufacture of an impregnated cloth comprising at least:
a) bringing together at least one reinforcing cloth and particles exhibiting a median diameter D50 of between 0.3 and 2 mm; the said particles are obtained from a polyamide composition exhibiting a melt viscosity of between 0.5 and 50 Pa.s; the latter being measured on the Newtonian plateau at a shear rate of 100 s⁻¹ in a capillary rheometer at a temperature of 25°C above the melting point of the polyamide composition;
b) heating the mixture obtained in stage a) to a temperature which makes possible the at least partial melting of the particles; and
c) recovering the impregnated cloth.

2. Process according to Claim 1, **characterized in that** the polyamide composition comprises a polyamide exhibiting a number-average molecular weight Mn of greater than 8000 g/mol.

3. Process according to Claim 1 or 2, **characterized in that** the polyamide composition comprises an aliphatic or semi-aromatic semicrystalline polyamide.

4. Process according to any one of Claims 1 to 3, **characterized in that** the polyamide composition comprises a novolac resin.

5. Process according to any one of Claims 1 to 4, **characterized in that** the polyamide composition comprises between 1% and 30% by weight of novolac resin.

6. Process according to any one of Claims 1 to 5, **characterized in that** the particles exhibit a median diameter D50 of between 0.5 and 1.5 mm.

7. Process according to any one of Claims 1 to 6, **characterized in that** stage a) is carried out by dusting or impregnation by passing through a fluidized bed.

8. Process according to any one of Claims 1 to 7, **characterized in that** stage b) is carried out at a temperature of between 230°C and 350°C.

9. Process according to any one of Claims 1 to 8, **characterized in that** the impregnated cloth comprises:
- from 40% to 70% by volume of reinforcing cloth, and
- from 30% to 60% by volume of polyamide, with respect to the total volume of the impregnated cloth.
